# EUROPEAN PATENT APPLICATION

(11) **EP 1 331 798 A2**
(43) Date of publication of application: **30.07.2003**
(21) Application number: 02255246.7
(22) Date of filing: 26.07.2002
(51) Int. Cl.: H04M 1/2745, H04M 1/725

(54) **Computer-readable storage medium containing program instructions for managing data in communication terminal**

(30) Priority: 23.01.2002 JP 2002014031
(71) Applicant: FUJITSU LIMITED, Kawasaki-shi, Kanagawa 211-8588 (JP)
(72) Inventor: Cho, Hun Hong, Fujitsu Peripherals Ltd, Hyogo 673-1447 (JP); Ueyama, Satoru, Fujitsu Peripherals Ltd, Hyogo 673-1447 (JP); Teramoto, Hiroki, Fujitsu Peripherals Ltd, Hyogo 673-1447 (JP); Nakanishi, Osamu, Fujitsu Peripherals Ltd, Hyogo 673-1447 (JP); Kosaki, Hiroshi, Fujitsu Peripherals Ltd, Hyogo 673-1447 (JP); Shinohara, Hiroshi, Fujitsu Peripherals Ltd, Hyogo 673-1447 (JP); Sakata, Takuya, Fujitsu Peripherals Ltd, Hyogo 673-1447 (JP); Nakayama, Yuuji Fujitsu Peripherals Ltd, Hyogo 673-1447 (JP)
(74) Representative: Mohun, Stephen John

(57) **Abstract**

A telephone directory database is established in a mobile phone terminal (12a). When a calling operation is executed in the mobile phone terminal, data included in the telephone directory database is sent out into the data network (15). A server computer in the central office (16) may receive the data. The received data is registered into a database for backup data in the server computer. The backup data for the telephone directory database is reliably prepared in the server computer in this manner. A user of the mobile phone terminal is allowed to easily re-establish the telephone directory database in a new mobile phone terminal (12b) based on the backup data.

## Description

The present invention relates to a communication system, in particular, to program instructions for managing a database, such as a telephone directory database, established in a mobile communication terminal.

A telephone directory database is often established in a mobile or portable communication terminal. In general, the telephone directory database contains personal information such as telephone number, name, and E-mail address. The personal information for over hundred individuals may be registered in the telephone directory database.

Loss of the mobile communication terminal, for example, leads to unavailability or inaccessibility of the personal information registered in the telephone directory database. A user has to register the personal information, one by one, in a new telephone directory database established in another communication terminal. It is troublesome. There is a strong demand to prepare a backup data for the personal information in a telephone directory database established in a mobile communication terminal.

Accordingly, embodiments of the present invention aim to provide a communication system capable of preparing backup data for a database established in a communication terminal in a relatively simple manner.

According to a first aspect of the present invention, there is provided program instructions for managing data in a communication terminal, comprising: computer program code causing a processor to determine a receiver of a call based on a calling operation made on a communication terminal; computer program code causing a processor to obtain a receiver information data specifying information related to the receiver; and computer program code causing a processor to transmit the receiver information data into a data network. The program instructions may be installed in a communication terminal such as a mobile or cellular phone unit, a satellite phone unit, a personal digital assistant (PDA), and the like, for example. A processor of the communication terminal implements the program instructions so as to establish the aforementioned procedure.

On the other hand, according to a second aspect of the present invention, there is provided program instructions for managing data, comprising: computer program code causing a processor to determine a communication terminal of a transmitter based on a data signal picked up from a data network; computer program code causing a processor to search a database table allocated to the communication terminal of the transmitter; and computer program code causing a processor to register data included in the data signal into the database table. The program instructions may be installed in a server computer connected to the data network, for example. A processor of the server computer implements the program instructions so as to establish the aforementioned procedure.

With a combination of the first and second aspects of the invention, the server computer may receive the receiver information data transmitted from the communication terminal. The receiver information data received by the server computer can be stored in a database for backup data, for example. In this manner, the backup data is reliably prepared in connection with the information of a receiver of a call. A user of the communication terminal is allowed to reestablish the information concerning the receiver in a new communication terminal without any difficulty based on the backup data. The user is released from a troublesome operation to input the information, one by one, into the communication terminal.

Moreover, the receiver information data is automatically sent out from the communication terminal to the data network every time the calling operation is executed. The user of the communication terminal needs not take any special operations or actions in executing the backup of the information. The user is also released from additional troublesome operations or actions.

The program instructions may further include a computer program code causing a processor to request establishment of a data channel in response to the calling operation. In this case, the calling operation leads to a reliable transmission of the receiver information data into the data network.

According to a third aspect of the present invention, there is provided program instructions for managing data in a communication terminal, comprising: computer program code causing a processor to read data out of a database established in the communication terminal; and computer program code causing a processor to transmit the data into a data network. The program instructions may be installed in a communication terminal such as a mobile or cellular phone unit, a satellite phone unit, a personal digital assistant (PDA), and the like, for example. A processor of the communication terminal implements the program instructions so as to establish the aforementioned procedure.

The program instructions of the third aspect may be utilized in combination with the program instructions of the second aspect. For example, the server computer is allowed to receive the data transmitted from the communication terminal. The data received by the server computer can be stored in a database for backup data, for example. In this manner, the backup data is reliably prepared in connection with the database established in the communication terminal. A user of the communication terminal is allowed to reestablish the existing database in a new communication terminal without any difficulty based on the backup data. The user is released from a troublesome operation to input the data, one by one, into the communication terminal.

The program instructions may further include a computer program code causing a processor to request establishment of a data channel in response to the calling operation. In this case, the calling operation leads to a reliable transmission of the data within the database into the data network.

In any event, there may be provided program instructions for managing a telephone directory database in a communication terminal, comprising: computer program code causing a processor to obtain a telephone number data specifying telephone number; computer program code causing a processor to obtain a personal information data specifying information related to the telephone number; computer program code causing a processor to generate an encoded data including at least an encoded form of the personal information data; and computer program code causing a processor to register the encoded data in connection with the telephone number data.

When the processor of the communication terminal implements the aforementioned program instructions for managing data in the communication terminal, the encoded data previously prepared in the communication terminal can be transmitted into the data network. A good security can be ensured in the backup operation.

According to the aforementioned program instructions for managing data in a communication terminal, there may be provided a portable communication terminal or cellular phone unit comprising: a storage medium storing a telephone directory database; a processor pulling out of the telephone directory database a receiver information data related to a receiver determined in response to a calling operation; and a communication controller circuit transmitting the receiver information data into a data network. In addition, according to the aforementioned program instructions for managing data in a server computer, there may be provided a data network controlling or management apparatus comprising: a storage medium storing a set of database tables allocated to individual communication terminals; a communication controller circuit receiving a data signal from a data network; and a processor registering data included in the data signal into the database table allocated to a communication terminal of a transmitter of the data signal.

A preferred embodiment of the present invention will now be described, by way of example only, with reference to the accompanying drawings in which:
Fig. 1 is a schematic view illustrating the structure of a mobile telecommunication system;
Fig. 2 is a block diagram illustrating the structure of a mobile phone terminal;
Fig. 3 is a schematic view illustrating the structure of a telephone directory database;
Fig. 4 is a block diagram illustrating the structure of a data communication controlling apparatus;
Fig. 5 is a schematic view illustrating the structure of a personal information database;
Fig. 6 is a flowchart illustrating an example of the processes of a data management software installed in the mobile phone terminal of a transmitter;
Fig. 7 is a flowchart illustrating the procedures of "transmission of data signals (1)" at step S4 in Fig. 6;
Fig. 8 is a flowchart illustrating the procedures of "transmission of data signals (2)" at step S8 in Fig. 6;
Fig. 9 is a schematic view illustrating the structure of a packet;
Fig. 10 is a flowchart illustrating an example of the processes of the data management software when operating the telephone directory database; and
Fig. 11 is a flowchart illustrating an example of the procedure of a data management software in a server computer.

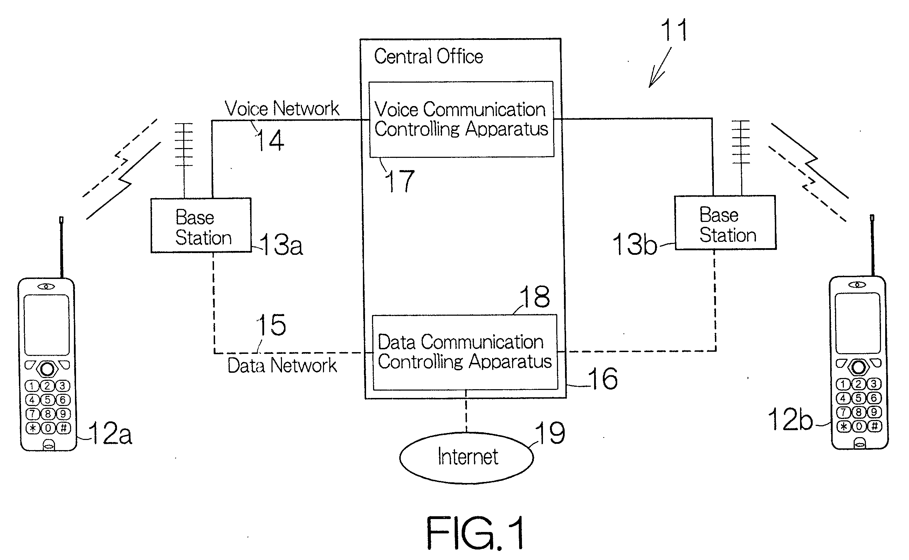

As shown in Fig. 1, a mobile telecommunication system 11 includes base stations 13a, 13b capable of establishing wireless communications with mobile or cellular phone terminals 12a, 12b located in corresponding cells. Wireless transaction of voice signals and data signals (or packets) is conducted between the base stations 13a, 13b and the mobile phone terminals 12a, 12b. The base stations 13a, 13b are connected to each other through a voice network 14 and a data network 15, for example. It should be noted that the transaction of data signals may be realized based on any types of communications other than the packet communication. In addition, wire transaction, with or without wireless transaction, may be utilized to realize the exchange of voice and/or data signals.

A central office 16 is connected to the voice network 14 and the data network 15. The central office 16 includes a voice communication controlling apparatus 17. The voice communication controlling apparatus 17 is designed to manage identification of and charges to mobile phone terminals 12a, 12b upon establishment of voice communication channels. When a voice communication channel is established in the voice network 14 based on the performance of a switchboard, not shown, for example, mobile phone terminals 12a, 12b are allowed to exchange voice signals therebetween.

Likewise, the central office 16 includes a data communication controlling apparatus 18. The data communication controlling apparatus 18 is designed to manage charges to data communications for individual mobile phone terminals 12a, 12b. The data communication controlling apparatus 18 is able to determine mobile phone terminal 12a, 12b to be charged based on the content of a header attached to a packet received from the data network 15, for example. A header of a packet may include information specifying the identification of a transmitter as well as information specifying a receiver of the packet, for example. The data communication controlling apparatus 18 transmits packets received from the data network 15 into the Internet 19 or a private line. The data communication controlling apparatus 18 also transmits packets received from the Internet 19 or a private line into the data network 15. A data communication channel for the transaction of packets is established between the base station 13a, 13b and the mobile phone terminals 12a, 12b.

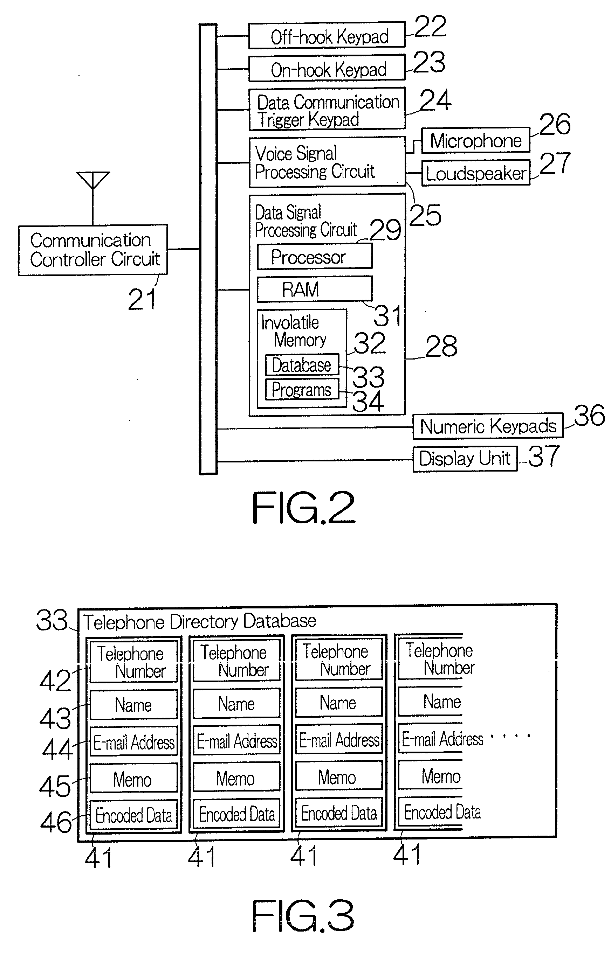

As shown in Fig. 2, the mobile phone terminal 12a, 12b includes a communication controller circuit 21 designed to exchange voice and data signals with the base station 13a, 13b. The communication controller circuit 21 operates to establish and disconnect a voice communication channel based on control signals supplied from an off-hook keypad 22 and an on-hook keypad 23. Likewise, the communication controller circuit 21 operates to establish a data communication channel based on a control signal supplied from a data communication trigger keypad 24, for example. The established data communication channel can be maintained between the mobile phone terminal 12a, 12b and the base station 13a, 13b as long as the mobile phone terminal 12a, 12b is kept switched on.

A voice signal processing circuit 25 is connected to the communication controller circuit 21 in the mobile phone terminal 12a, 12b. The voice signal processing circuit 25 generates voice signals based on voice transmitted through a microphone 26, for example. The communication controller circuit 21 serves to transmit the generated voice signals toward the base station 13a, 13b. The voice signal processing circuit 25 also causes a loudspeaker 27 to reproduce voice based on the voice signals received from the communication controller circuit 21.

A data signal processing circuit 28 is also connected to the communication controller circuit 21 in the mobile phone terminal 12a, 12b. The data signal processing circuit 28 includes a processor 29 such as a microprocessor unit (MPU), and a random access memory (RAM) 31 as well as an involatile memory 32, both connected to the processor 29. The involatile memory 32 may be a flash memory, for example. The involatile memory 32 holds therein a telephone directory database 33 and software programs 34 related to various functions of the mobile phone terminal 12a, 12b. The processor 29 is allowed to utilize the working area of the RAM 31 so as to implement the software programs 34. The software programs 34 include a data management software program according to the present invention. The content of the data management software program will be described later in detail.

The processor 29 operates to collect various data based on the implementation of the software programs 34. Numeric keypads 36 may be utilized to forward data to the processor 29. Alternatively, the processor 29 may receive data from the involatile memory 32. The data may be visualized on the screen of a display unit 37, for example. The communication controller circuit 21 generates packets based on the data received from the processor 29. The generated packets are transmitted toward the base station 13a, 13b.

The processor 29 is also allowed to obtain data from the communication controller circuit 21 based on the implementation of the software programs 34. The communication controller circuit 21 restores data based on packets received from the base station 13a, 13b. The restored data is transferred to the processor 29. The processor 29 utilizes the received data in implementing the software programs 34. The received data as well as the result or process of the implementation of the software programs 34 may be visualized on the screen of the display unit 37 based on instructions from the processor 29, for example.

As shown in Fig. 3, the telephone directory database 33 includes storage areas 41 allocated to individual telephone numbers. The individual storage area 41 is designed to hold therein a telephone number data 42 specifying telephone number, a name data 43 specifying name, an address data 44 specifying E-mail address , and amemo data 45 specifying series of characters, for example, within the maximum 40 numeral or alphabetical characters. The telephone data 42, the name data 43, the address data 44 and the memo data 45 are related in the individual storage area 41. A set of the related telephone data 42, the name data 43, the address data 44 and the memo data 45 provides a personal information data.

As is apparent from Fig. 3, an encoded data 46 is also stored in the individual storage area 41 of the telephone directory database 33. Any encoding software may be utilized to generate the encoded data 46. The encoded data 46 includes encoded forms of the telephone data 42, the name data 43, the address data 44 and the memo data 45. When the encoded data 46 is decoded, the telephone data 42, the name data 43, the address data 44 and the memo data 45 belonging to the corresponding storage area 41 can be derived.

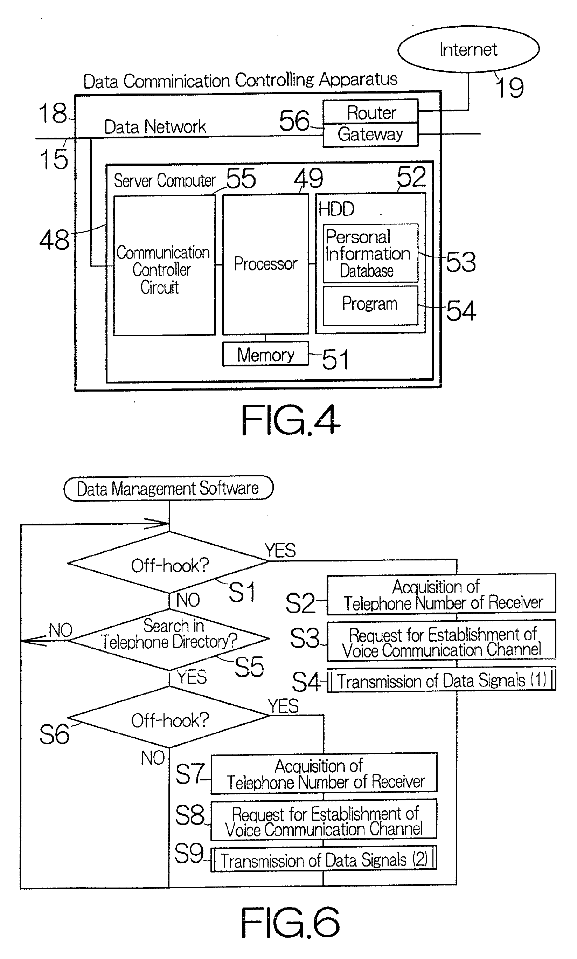

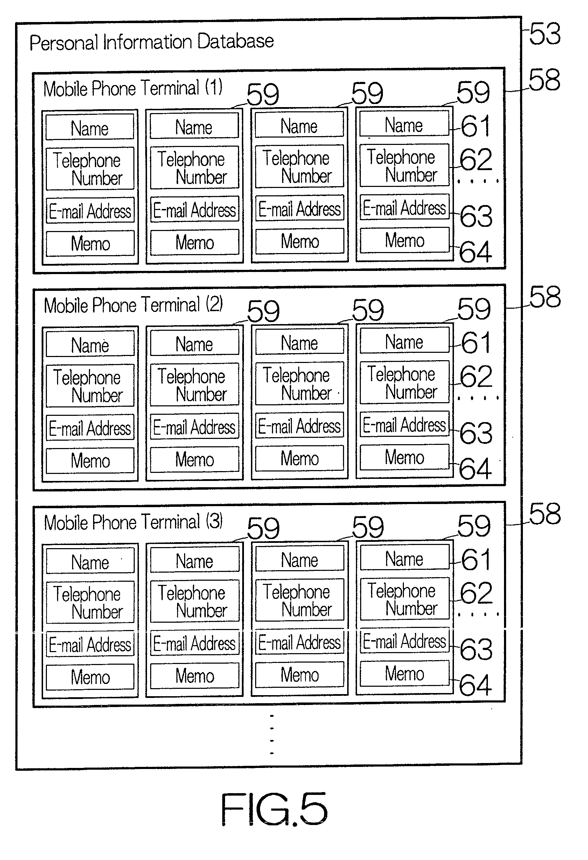

As shown in Fig. 4, the data communication controlling apparatus 18 includes a server computer 48 connected to the data network 15. The server computer 48 comprises a processor 49 such as a central processing unit (CPU) and a memory 51 connected to the processor 49. The processor 49 is allowed to implement software programs temporarily stored in the memory 51, for example, so as to realize any method. The memory 51 may temporarily store various data during implementation of the software programs.

A large capacity storage equipment or hard disk drive unit (HDD) 52 is connected to the processor 49. The HDD 52 holds therein a personal information database 53 and a data management software program 54 designed to manage the personal information database 53. The content of the data management software program 54 will be described later in detail. Alternatively, the personal information database 53 may be constructed in a disk array system, not shown, connected to the server computer 48, for example.

A communication controller circuit 55 is connected to the processor 49. The communication controller circuit 55 serves to connect the processor 49 to the data network 15. The communication controller circuit 55 restores data based on packets received from the data network 15. The restored data is transferred to the processor 49. In addition, the communication controller circuit 55 generates packets based on data received from the processor 49. The generated packets are transmitted into the data network 15.

The server computer 48 may be connected to a gateway 56 incorporated within the data communication controlling apparatus 18, and to the Internet 19 through the gateway 56. The gateway 56 serves to receive packets generated in accordance with a protocol unique to the data network 15 and forward the packets into the Internet 19 after translation into a protocol unique to the Internet 19. The gateway 56 also serves to forward to the data network 15 packets generated in a protocol unique to the Internet 19 after translation into a protocol unique to the data network 15.

As shown in Fig. 5, the personal information database 53 includes database tables 58 of a predetermined storage area allocated to individual mobile phone terminals 12a, 12b. The individual database table 58 is designed to hold therein one or more personal information data 59. The individual personal information data includes a name data 61 specifying name, a telephone number data 62 specifying telephone number, an address data 63 specifying E-mail address, and a memo data 64 specifying series of characters, for example, within the maximum 40 numeral or alphabetical characters.

Now, assume that a voice communication channel is to be established between the mobile phone terminals 12a, 12b. A user of the mobile phone terminal 12a first conducts a calling operation. The user may manipulate the numeric keypads 36, subsequent to a push of the off-hook keypad 22, so as to input the telephone number of a receiver. Alternatively, the user may press the off-hook keypad 22 after selecting the telephone number of a receiver in the telephone directory database 33. The processor 29 of the mobile phone terminal 12a first starts to implement the data management software program stored in the involatile memory 32.

As shown in Fig. 6, the processor 29 of the mobile phone terminal 12a monitors the action of the off-hook keypad 22 prior to a search operation in the telephone directory database 33 at step S1. If the telephone number of the receiver or mobile phone terminal 12b is input through the manipulation of the numeric keypads 36 after the press of the off-hook keypad 22, the processor 29 correspondingly gets the telephone number of the receiver at step S2. The processor 29 then generates a request signal for establishment of a voice communication channel at step S3. The generated request signal is transmitted from the communication controller circuit 21 toward the base station 13a. A calling operation of the mobile phone terminal 12a has been completed in this manner. When a voice communication channel is established, telephone messages can be exchanged between the mobile phone terminals 12a, 12b. The process of the processor 29 then proceeds to step S4. The processor 29 carries out the process of "transmission of data signals (1)" at step S4. The process of "transmission of data signals (1)" will be described later in detail.

Likewise, the processor 29 monitors any search operation in the telephone directory database 33 prior to a press of the off-hook keypad 22 at step S5. If search is conducted prior to a push of the off-hook keypad 22, the processor 29 then monitors the action of the off-hook keypad 22 at step S6. When the off-hook keypad 22 is pressed, the processor 29 gets the telephone number of the receiver or mobile phone terminal 12b from the telephone directory database 33 at step S7. The processor 29 thereafter generates a request signal for establishment of a voice communication channel at step S8. The generated request signal is transmitted from the communication controller circuit 21 toward the base station 13a. A calling operation of the mobile phone terminal 12a has been completed in this manner. When a voice communication channel is established, telephone messages can be exchanged between the mobile phone terminals 12a, 12b. The process of the processor 29 then proceeds to step S9. The processor 29 carries out the process of "transmission of data signals (2)" at step S9. The process of "transmission of data signals (2)" will be described later in detail.

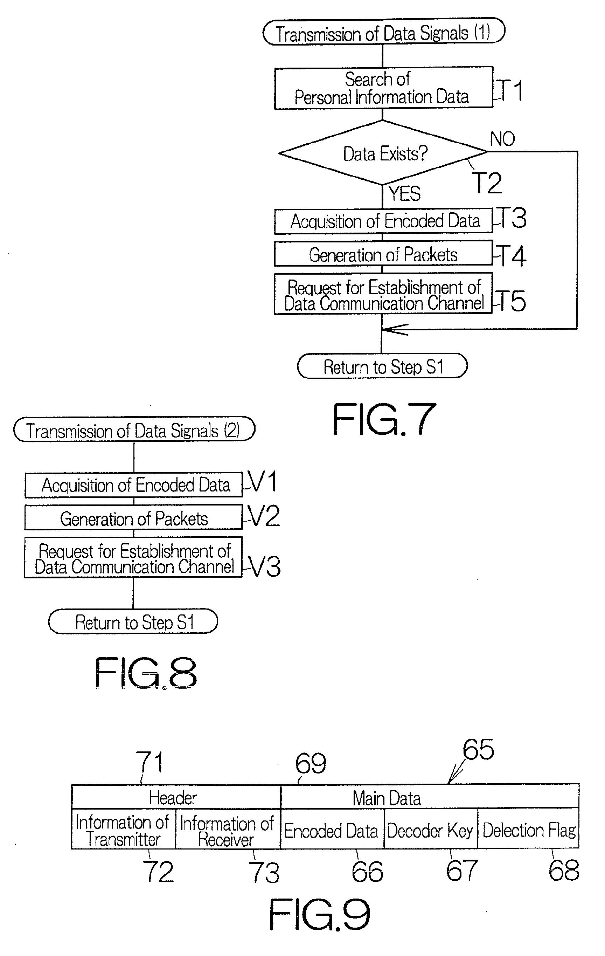

Referring to the flowchart shown in Fig. 7, the procedure of "transmission of data signals (1)" (step S4 in Fig. 6) will be described. When the telephone number of the receiver has been determined based on the calling operation in the aforementionedmanner, the processor 29 searches a corresponding personal information data in the telephone directory database 33 at step T1. The processor 29 seeks in the telephone directory database 33 the determined telephone number of the receiver. If any telephone number data specifying the determined telephone number cannot be found in the telephone directory database 33, the process of the processor returns to the aforementioned step S1 in Fig. 6. If the determined telephone number is found out, the process of the processor 29 advances to step T3. The personal information data for the receiver can be determined based on the found telephone number.

The processor 29 then gets the encoded data 46 from the storage area 41 of the determined personal information data at step T3. The processor 29 requests the communication controller circuit 21 to transmit the encoded data at step T4. The encoded data is supplied to the communication controller circuit 21. The communication controller circuit 21 generates packets of the encoded data in accordance with a specific procedure. The processor 29 thereafter generates a request signal for establishment of a data communication channel at step T5. The generated request signal is transmitted from the communication controller circuit 21 toward the base station 13a. When a data communication channel has been established, the generated packets are transmitted toward the base station 13a. Subsequently, the process of the processor 29 returns to the aforementioned step S1 in Fig. 6. In this manner, every time the calling operation is executed, the encoded data, namely, the information data of a specific receiver, including the name data, telephone number data, the address data and the memo data, is transmitted into the data network 15.

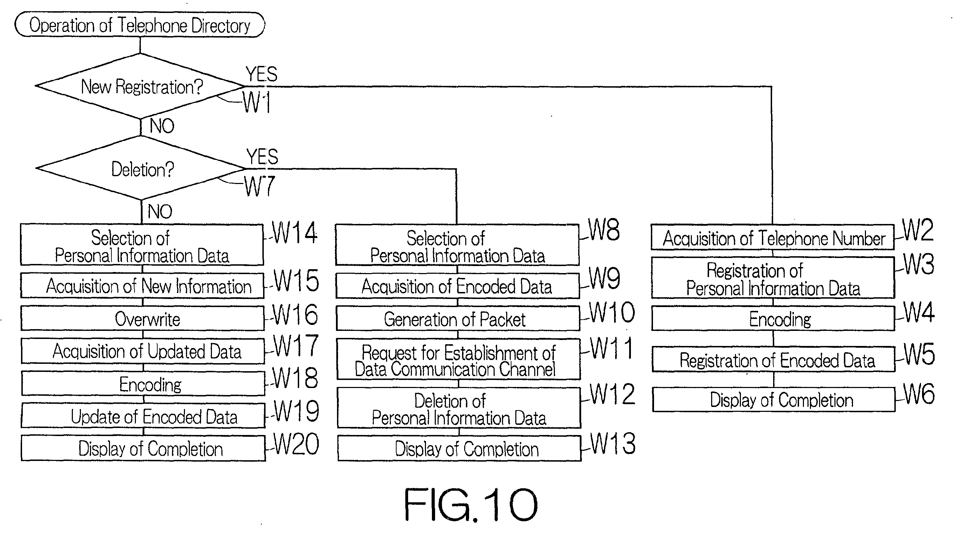

Next, referring to the flowchart shown in Fig. 8, the procedure of "transmission of data signals (2)" (step S9 in Fig. 6) will be described. When the telephone number of the receiver has been determined based on the calling operation in the aforementioned manner, the processor 29 gets, at step V1, the encoded data 46 from the storage area 41 of the personal information data determined in the telephone directory database 33. The processor 29 requests the communication controller circuit 21 to transmit the encoded data at step V2. The encoded data is supplied to the communication controller circuit 21. The communication controller circuit 21 generates packets of the encoded data in accordance with a specific procedure. The processor 29 thereafter generates a request signal for establishment of a data communication channel at step V3. The generated request signal is transmitted from the communication controller circuit 21 toward the base station 13a. When a data communication channel has been established, the generated packets are transmitted toward the base station 13a. Subsequently, the process of the processor 29 returns to the aforementioned step S1 in Fig. 6. In this manner, every time the calling operation is executed, the encoded data, namely, the information data of a specific receiver, including the name data, telephone number data, the address data and the memo data, is transmitted into the data network 15.

As shown in Fig. 9, the packet 65 may include a main data 69 comprising an encoded data 66, a decoder key 67 and a deletion flag 68, for example. The encoded data 67 is supplied from the telephone directory database 33 in the aforementioned manner. The encoded data 66 includes the information data of a specific receiver, in which the information related to a receiver is specified as described above, in other words, the personal information data including the name data, the telephone number data, the address data and the memo data. The decoder key 67 is utilized to decode the encoded data 66, for example. The deletion flag 68 comprises a value [1] or [0], for example. Here, the value [1] is written in the deletion flag 68. The function of the deletion flag 68 will be described later.

A header 71 is added to the main data 69 in the packet 65 in a conventional manner. The header 71 is allowed to include information 72 related to a transmitter and information 73 related to a receiver. Here, the identification of the mobile phone terminal 12a can be discovered in the information 72 of a transmitter. The information 73 of a receiver serves to identify the server computer 48. The packet 65 generated in the mobile phone terminal 12a is thus received in the server computer 48.

Now, assume that a user operates the telephone directory database 33 in the mobile phone terminal 12a. The processor 29 of the mobile phone terminal 12a implements the data management software program, namely, a telephone directory database management software program, stored in the involatile memory 32. The telephone directory database management software serves to realize registration, update and deletion of a personal information data based on the telephone directory database 33. For example, when registration procedure of a new personal information data is selected in the mobile phone terminal 12a, the processor 29 recognizes the selection of the new registration at step W1, as shown in Fig. 10. The processor 29 acts to get a specific telephone number at step W2. The user may utilize numeric keypads 36 to input the telephone number. Alternatively, the telephone number may be extracted from a history data specifying the history of calls.

The processor 29 then registers the telephone number data 42, the name data 43, the address data 44 and the memo data 45 into the storage area 41 of the telephone directory database 33 at step W3. The processor 29 may obtain the personal information data based on the manipulation of the numeric keypads 36, for example. The personal information data should include at least the name data.

When the personal information data 42-45 has been registered, the processor 29 serves to encode the registered personal information data 42-45 in accordance with a specific encoding algorithm at step W4. The personal information data 42-45 after the encoding, namely the encoded data,is likewise registered into the storage area 41 of the telephone directory database 33 at step W5. When the personal information data 42-45 as well as the encoded data 46 have been entered, the processor 29 serves to display the completion of the registration on the screen of the display unit 37 at step W6.

Next, when deletion procedure of a personal information data is selected in the mobile phone terminal 12a, the processor 29 recognizes the selection of the deletion at step W7. A specific personal information data 42-45 to be deleted is then selected in the telephone directory database 33. The processor 29 recognizes the selected personal information data 42-45 at step W8.

The processor 29 thereafter acts to get the encoded data 46 from the storage area 41 for the recognized personal information data 42-45 at step W9. The processor 29 requests the communication controller circuit 21 to realize the transmission of the encoded data at step W10. The encoded data is supplied to the communication controller circuit 21. The communication controller circuit 21 generates a packet 65 including the encoded data in accordance with a specific procedure. Here, the value [0] is written into the deletion flag 68 in the packet 65.

The processor 29 generates a request signal for establishment of a data communication channel at step W11. The generated request signal is transmitted from the communication controller circuit 21 toward the base station 13a. When a data communication channel has been established, the generated packet 65 is transmitted toward the base station 13a. Subsequently, the processor 29 acts to delete the personal information data 42-45 as well as the encoded data 46 from the corresponding storage area 41. When the deletion of the personal information data 42-45 has been completed in this manner, the processor 29 serves to display the completion of the deletion on the screen of the display unit 37 at step W13. Every time the personal information data 42-45 is deleted from the telephone directory database 33, a packet 65 including the personal information data to be deleted is transmitted into the data network 15.

Next, when update procedure of a personal information data is selected in the mobile phone terminal 12a, the processor 29 recognizes the selection of the update. The process of the processor 29 proceeds to step W14. A personal information data 42-45 to be updated is selected in the telephone directory database 33. The processor 29 recognizes the selected personal information data 42-45 at step W14. Subsequently, the personal information data is overwritten. The numeric keypads 36 may be utilized to input a new information, for example. The processor 29 serves to overwrite the existing personal information data 42-45 in the corresponding storage area 41 with the new information at step W16. In this manner, the personal information data 42-45 can be updated.

When the personal information data 42-45 have been updated in the telephone directory database 33, the processor 29 extracts the updated personal information data 42-45 at step W17. The processor 29 then serves to encode the updated personal information data 42-45 in accordance with a specific encoding algorithm at step W18. The personal information data 42-45 after the encoding, namely the encoded data,is likewise registered in the corresponding storage area 41 in the telephone directory database 33 at step W19. The existing encoded data 46 is overwritten with the new encoded data. The encoded data 46 has been updated. In this manner, the content of the encoded data 46 always keeps reflecting the content of the personal information data 42-45. When the personal information data 42-45 as well as the encoded data 46 have been updated, the processor 29 serves to display the completion of the update on the screen of the display unit 37 at step W20.

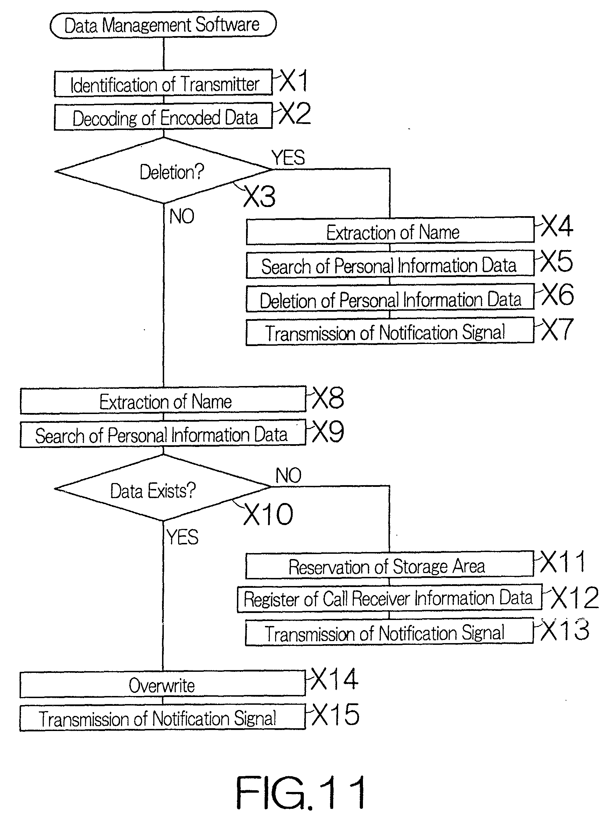

Now, assume that the server computer 48 receives the packet 65. The processor 49 of the server computer 48 implements the data management software program stored in the HDD 52. As shown in Fig. 11, the processor 49 of the server computer 48 recognizes the mobile phone terminal 12a as the transmitter of the packet 65 at step X1. For example, the communication controller circuit 55 serves to reveal the identification of the mobile phone terminal 12a based on the header 71 of the packet 65. The communication controller circuit 55 then notifies the processor 49 of the identification of the mobile phone terminal 12a.

A register database is prepared in the server computer 48. The register database contains the list of all mobile phone terminals 12a, 12b which reserve the database tables 58 in the personal information database 53. If the ID or telephone number of the mobile phone terminal 12a is not found in the list in the register database, the process or 49 discontinues the process. If the identification of the mobile phone terminal 12a in the packet 65 is confirmed in the register database, the processor 49 starts to search in the personal information database 53 the database table 58 allocated to the mobile phone terminal 12a.

The processor 49 acts to decode the encoded data 66 taken out of the packet 65 at step X2. The processor 49 may utilize the decoder key 67 likewise taken out of the packet 65. The processor 49 realizes the decoding of the encoded data 66 in accordance with a specific decoding algorithm. The decoding leads to restoration of the personal information data, including the name data, the telephone number data, the address data and the memo data. The restored personal information data is hereinafter referred to as a call receiver information data.

The processor 49 then checks the deletion flag 68 in the packet 65 at step X3. If the value [0] is found in the deletion flag 68, the process of the processor 49 advances to step X4. The processor 49 extracts the name data from the call receiver information data at step X4. The processor 49 thereafter acts to find the corresponding personal information data 59 in the database table 58 based on the name specified in the name data at step X5. The processor 49 then acts to delete the corresponding personal information data 59 from the database table 58 at step W6. When the personal information data 59 has been deleted in this manner, the processor 49 generates a notification signal specifying completion of the deletion at step X7. The notification signal is sent out toward the mobile phone terminal 12a through the communication controller circuit 55 and the data network 15.

When the value [1] is confirmed in the deletion flag 68 at step X3, the processor 49 acts to extract the name data from the call receiver information data at step X8. The processor 49 thereafter acts to find out the corresponding personal information data 59 in the database table 58 based on the name specified in the name data at step X9. The processor 49 searches for a name identical to the name specified in the name data in the database table 58. If no name is matched up with the name of the name data at step X10, the process of the processor 49 advances to step X11.

The processor 49 serves to reserve a storage area for a new personal information data 59 in the database table 58 at step X11. The processor 49 acts to register the call receiver information data in the reserved storage area at step X12. When the call receiver information data has been registered, the processor 49 generates a notification signal specifying completion of the new registration at step X13. The notification signal is sent out toward the mobile phone terminal 12a through the communication controller circuit 55 and the data network 15.

If any name in the database table 58 is matched up with the name in the call receiver information data at step X10, the process of the processor 49 advances to step X14. The processor 49 serves to overwrite the existing personal information data 59 in the database table 58 with the call receiver information data at step X14. The personal information data 59 can be updated in this manner in the database table 58. If any change is made on the telephone number data, the address data and the memo data in the call receiver information data, such a change is reflected on the personal information data 59 in the database table 58. After the personal information data 59 has been updated, the processor 49 generates a notification signal specifying completion of the update at step X15. The notification signal is sent out toward the mobile phone terminal 12a through the communication controller circuit 55 and the data network 15.

In the aforementioned mobile telecommunication system 11, the mobile phone terminal 12a allows the personal information data 42-45 included in the telephone directory database 33 to be reliably backed up in the personal information database 53 established in the server computer 48. When a user is forced to establish the telephone directory database in a new mobile phone terminal 12a, 12b, the user may simply download the personal information data 59 from the personal information database 53. The user is able to reestablish the existing telephone directory database 33 in a new mobile phone terminal 12a, 12b without any difficulty. The user is released from the burden to input the personal information data, one by one, into a new telephone directory database 33, for example, through manipulation of the numeric keypads 36.

In addition, the user of the mobile phone terminal 12a need not take any special operations or actions in executing the backup of the personal information data 42-45. The personal information data corresponding to the call receiver information data can be updated upon each call. The user is also released from any troublesome operations or actions.

In the aforementioned embodiment, every time the personal information data is deleted from the mobile phone terminal 12a, the corresponding personal information data 59 is automatically deleted from the personal information database 53 in the server computer 48. However, it is not necessary to interlock the deletion of the personal information data from the mobile phone terminal 12a with the deletion of the personal information data 59 from the server computer 48. A specific personal information data 59 may be deleted from the personal information database 53 in the server computer 48, independently of the deletion of the personal information data from the mobile phone terminal 12a, based on a specific operation on the mobile phone terminal 12a.

## Claims

1. A computer-readable storage medium containing program instructions for managing data in a communication terminal, comprising:
computer program code for causing a processor to determine a receiver of a call based on a calling operation made on a communication terminal;
computer program code for causing a processor to obtain receiver information data specifying information related to the receiver; and
computer program code for causing a processor to transmit the receiver information data into a data network.

2. The computer-readable storage medium according to claim 1, further containing program instructions comprising, computer program code for causing a processor to request establishment of a data channel in response to the calling operation.

3. A computer-readable storage medium containing program instructions for managing data in a communication terminal, comprising:
computer program code for causing a processor to request establishment of a data channel in response to a calling operation made on a communication terminal;
computer program code for causing a processor to read data out of a database established in the communication terminal; and
computer program code for causing a processor to transmit the data into a data network.

4. A computer-readable storage medium containing program instructions for managing a telephone directory database in a communication terminal, comprising:
computer program code for causing a processor to obtain a telephone number data specifying telephone number;
computer program code for causing a processor to obtain a personal information data specifying information related to the telephone number;
computer program code for causing a processor to generate an encoded data including at least an encoded form of the personal information data; and
computer program code for causing a processor to register the encoded data in connection with the telephone number data.

5. A computer-readable storage medium containing program instructions for managing data, comprising:
computer program code for causing a processor to determine a communication terminal of a transmitter based on a data signal picked up from a data network;
computer program code for causing a processor to search a database table allocated to the communication terminal of the transmitter; and
computer program code for causing a processor to register data included in the data signal into the database table.

6. The computer-readable storage medium according to claim 5, wherein said data is receiver information data specifying information related to a receiver of a call from the communication terminal of the transmitter.

7. A portable communication terminal comprising:
a storage medium for storing a telephone directory database;
a processor for pulling out of the telephone directory database receiver information data related to a receiver determined in response to a calling operation; and
a communication controller circuit for transmitting the receiver information data into a data network.

8. A data network management apparatus comprising:
a storage medium for storing a set of database tables allocated to individual communication terminals;
a communication controller circuit for receiving a data signal from a data network; and
a processor for registering data included in the data signal into the database table allocated to a communication terminal of a transmitter of the data signal.
